# FASCICULE DE BREVET EUROPEEN

(11) **EP 0 638 822 B1**
(45) Date de publication et mention de la délivrance du brevet: **28.01.1998**
(21) Numéro de dépôt: 94111834.1
(22) Date de dépôt: 29.07.1994
(51) Int. Cl.: G01S 15/88, B60S 1/08, G10K 11/02

(54) **Dispositif de détection ultrasonore de corps étrangers présents à la surface extérieure d'une vitre, vitre équipée d'un tel dispositif et vitre destinée à être équipée d'un dispositif de détection ultrasonore**
Ultraschallvorrichtung zum Entdecken von Fremdkörpern auf der Aussenfläche einer Scheibe, mit einer solchen Vorrichtung ausgestattete Scheibe und Scheibe bestimmt zum Ausstatten mit einer Ultraschall-Entdeckungsvorrichtung
Device for the ultrasonic detection of foreign bodies present on the exterior surface of a glass, glass equipped with such a device and glass intended for being equipped with an ultrasonic detection device

(30) Priorité: 09.08.1993 FR 9309848
(43) Date de publication de la demande: 15.02.1995
(73) Titulaire: ASULAB S.A., CH-2501 Bienne (CH)
(72) Inventeur: Saurer, Eric, CH-2022 Bevaix (CH)
(74) Mandataire: Patry, Didier Marcel Pierre

(56) Documents cités:
- EP-A- 0 494 824
- DE-A- 4 033 975
- PATENT ABSTRACTS OF JAPAN vol. 14, no. 482 (P-1119) 19 Octobre 1990 & JP-A-02 195 250 (ARAGAI KAZUTERU) 1 Août 1990
- PATENT ABSTRACTS OF JAPAN vol. 9, no. 57 (M-363) 13 Mars 1985 & JP-A-59 192 651 (TANAKA MICHIHIKO) 1 Novembre 1984
- ULTRASONICS, vol.27, no.6, Novembre 1989, GUILDFORD GB pages 331 - 342, XP74701 ANSON ET AL. 'On the problem of coupling of ultrasonic receivers to layered structures for process control'

## Description

L'invention concerne un dispositif de détection ultrasonore de corps étrangers présents à la surface extérieure d'une vitre, notamment d'un pare-brise pour véhicules automobiles, et plus particulièrement un tel dispositif de détection qui présente une grande sensibilité lorsqu'il est associé à un pare-brise asymétrique.

L'invention concerne également une vitre équipée d'un tel dispositif de détection ultrasonore et une vitre destinée à être équipée d'un dispositif de détection ultrasonore.

On connaît déjà différents dispositifs pour détecter la présence de corps étrangers présents à la surface d'une vitre. Le plus souvent, on tire parti du fait que la transmission d'une onde (onde optique, élastique, ou autre) dans le matériau de la vitre se trouve affectée par une modification du milieu dans lequel la vitre se trouve.

Ainsi, dans le cas du pare-brise d'un véhicule automobile, l'amplitude d'un signal ultrasonore se propageant dans l'épaisseur du pare-brise peut être plus ou moins atténuée en fonction de la présence d'un corps étranger à la surface d'une des parois du pare-brise. La détection de cette variation d'amplitude est donc représentative de la présence de corps étrangers à la surface du pare-brise et permet en conséquence de fournir un signal de commande exploitable, par exemple pour enclencher ou déclencher un dispositif de nettoyage.

La demande de brevet EP 0 512 653 propose un dispositif de nettoyage à commande automatique, notamment pour pare-brise de véhicule automobile, qui utilise ce principe et dans lequel un transducteur ultrasonore réalisant les fonctions d'émission et de réception est directement collé sur la surface intérieure d'un pare-brise.

Ce dispositif fonctionne de façon satisfaisante lorsqu'il est associé à des pare-brise dits symétriques, c'est-à-dire comportant deux plaques de verre de même épaisseur assemblées par une couche de liaison telle qu'une couche de polyvinylbutadiène (PVB).

En effet, lorsqu'un transducteur met en vibration deux plaques de verre réunies par une couche de liaison (couche de PVB), la transmission de l'onde incidente à travers la plaque de verre directement en contact avec le transducteur est maximale quand l'épaisseur de cette plaque est un multiple entier de la demi-longueur d'onde de l'onde incidente se propageant dans la plaque.

Par ailleurs, pour obtenir la sensibilité optimale à la détection de corps étrangers présents à la surface de la plaque de verre éloignée du transducteur, il est nécessaire que l'amplitude de la vibration de cette plaque de verre soit maximale. Or, cette condition n'est réalisée que si la fréquence de résonance de la plaque de verre en question est sensiblement égale à la fréquence de l'onde émise par le transducteur ou à un multiple entier de celle-ci. En d'autres termes, f₁=c/2e₁ doit être égale à K fois f=c/λ, f₁ étant la fréquence de résonance de la plaque éloignée du transducteur, c étant la vitesse de l'onde induite par le transducteur dans le verre, e₁ étant l'épaisseur de ladite plaque, f étant la fréquence de résonance du transducteur, λ la longueur d'onde du signal émis par le transducteur dans le verre et K un nombre entier. Par conséquent, on voit que les conditions ci-dessus sont remplies quand e₁=K. λ/2.

On comprend donc qu'il est aisé dans le cas d'un pare-brise symétrique, de choisir un transducteur émettant un signal dont la longueur d'onde est adaptée à l'épaisseur identique de chacune des plaques de verre formant le pare-brise.

En revanche, il ressort de ce qui vient d'être exposé plus haut que les conditions optimales de fonctionnement d'un tel dispositif ne sont plus remplies dès que le transducteur est appliqué sur une vitre ou un pare-brise dit asymétrique, c'est-à-dire comportant deux plaques de verre d'épaisseurs différentes assemblées par une couche de liaison telle qu'une couche de PVB.

Ces pare-brise asymétriques équipant sensiblement 50% du marché automobile, il est donc également intéressant de pouvoir équiper ces derniers d'un dispositif de nettoyage à commande automatique tel que celui décrit dans la demande de brevet EP 0 512 653.

Ainsi, l'invention a pour but principal de remédier aux inconvénients de l'art antérieur susmentionné en fournissant un dispositif de détection ultrasonore de corps étrangers présents à la surface extérieure d'un pare-brise qui puisse s'adapter à un pare-brise asymétrique, une vitre asymétrique équipée d'un tel dispositif et une vitre asymétrique destinée à être équipée d'un dispositif de détection ultrasonore.

A cet effet l'invention a pour objet un dispositif de détection ultrasonore de corps étrangers présents à la surface extérieure d'une vitre, ledit dispositif étant destiné à être associé à une vitre comprenant au moins une première plaque ayant une première épaisseur, une deuxième plaque ayant une deuxième épaisseur inférieure à ladite première épaisseur, lesdites plaques étant assemblées par une couche de liaison, ledit dispositif comprenant un transducteur pouvant émettre, via une face émettrice/réceptrice, un signal ultrasonore incident ayant une longueur d'onde λ dans lesdites plaques, l'épaisseur de la première plaque étant égale à k.λ/2, où k est un nombre entier, ledit transducteur pouvant, en outre, recevoir, via ladite face émettrice/réceptrice un signal ultrasonore réfléchi représentatif de la présence ou de l'absence desdits corps étrangers pour élaborer un signal de détection, caractérisé en ce que ledit transducteur ultrasonore comporte une lame fixée sur ladite face émettrice/réceptrice, ladite lame étant destinée à être fixée sur ladite deuxième plaque, et en ce que ladite lame présente une troisième épaisseur telle que la somme des deuxième et troisième épaisseurs est sensiblement égale à k'.λ/2, où k' est un deuxième nombre entier.

Grâce à ces caractéristiques, la transmission de l'onde ultrasonore s'effectue de la même façon que si le transducteur était directement fixé sur une vitre ou un pare-brise symétrique une fois que le dispositif selon l'invention est fixé sur un pare-brise asymétrique puisque l'ensemble lame/deuxième plaque peut être ainsi considéré comme une plaque unique ayant une épaisseur sensiblement égale à celle de la première plaque.

L'invention permet par conséquent de choisir aisément un transducteur émettant un signal dont la longueur d'onde est adaptée à l'épaisseur de chacune des plaques de verre du pare-brise dans le cas d'un pare-brise asymétrique.

L'invention a également pour objet une vitre comprenant au moins une première plaque ayant une première épaisseur, une deuxième plaque ayant une deuxième épaisseur inférieure à ladite première épaisseur, lesdites plaques étant assemblées par une couche de liaison, caractérisée en ce qu'elle comprend en outre un dispositif de détection ultrasonore de corps étrangers à la surface de ladite première plaque, ledit dispositif comprenant un transducteur pouvant émettre, via une face émettrice/réceptrice, un signal ultrasonore incident d'une longueur d'onde λ dans lesdites plaques, l'épaisseur de la première plaque étant égale à k.λ/2, où k est un nombre entier, ledit transducteur pouvant recevoir, via ladite face émettrice/réceptrice un signal ultrasonore réfléchi représentatif de la présence ou de l'absence desdits corps étrangers pour élaborer un signal de détection et ledit transducteur ultrasonore comportant une lame fixée entre ladite face émettrice/réceptrice et ladite deuxième plaque et présentant une troisième épaisseur telle que la somme des deuxième et troisième épaisseurs est sensiblement égale à k'.λ/2,où k' est un deuxième nombre entier.

L'ensemble de détection ainsi obtenu présente une sensibilité de détection équivalente à celle d'une vitre symétrique.

L'invention a également pour objet une vitre comprenant au moins une première plaque ayant une première épaisseur, une deuxième plaque ayant une deuxième épaisseur inférieure à ladite première épaisseur, lesdites plaques étant assemblées par une couche de liaison ladite vitre étant destinée à être équipée d'un dispositif de détection ultrasonore de corps étrangers à la surface de ladite première plaque, ledit dispositif comprenant un transducteur pouvant émettre, via une face émettrice/réceptrice, un signal ultrasonore incident d'une longueur d'onde λ dans lesdites plaques telle que k.λ/2 est égal à l'épaisseur de ladite première plaque, où k est un nombre entier, ledit transducteur pouvant recevoir, via ladite face émettrice/réceptrice un signal ultrasonore réfléchi représentatif de la présence ou de l'absence desdits corps étrangers pour élaborer un signal de détection, caractérisée en ce qu'elle comprend en outre une lame fixée sur ladite deuxième plaque et présentant une troisième épaisseur telle que la somme des deuxième et troisième épaisseurs est sensiblement égale à k'.λ/2, où k' est un deuxième nombre entier.

D'autres caractéristiques et avantages de l'invention apparaîtront plus clairement à la lecture de la description qui suit d'un mode de réalisation de l'invention donné à titre purement illustratif et non limitatif, cette description étant faite en liaison avec le dessin dans lequel:
- la figure 1 montre un schéma de principe d'un exemple de système de nettoyage d'un pare-brise à commande automatique avec lequel le dispositif de détection de l'invention peut être utilisé; et
- la figure 2 est une représentation schématique en coupe d'un dispositif de détection ultrasonore selon l'invention installé sur un pare-brise ayant une structure asymétrique.

La description de l'invention va être faite dans le cadre d'une application à l'élimination de corps étrangers humides tels que la pluie, la neige,la boue, etc., présents à la surface d'un pare-brise asymétrique pour véhicules automobiles.

Par pare-brise ou vitre asymétrique, on comprendra dans la suite de la description une vitre composite comprenant au moins une première plaque ayant une première épaisseur, et une deuxième plaque ayant une deuxième épaisseur inférieure à la première, les deux plaques étant assemblées par une couche de liaison.

Toutefois, il va de soi que l'invention n'est nullement limitée à cette application et qu'elle pourra être avantageusement utilisée dans le cadre de tout autre application à la détection de tout corps étranger présent à la surface d'une vitre asymétrique réalisée dans un matériau capable de transmettre un signal ultrasonore.

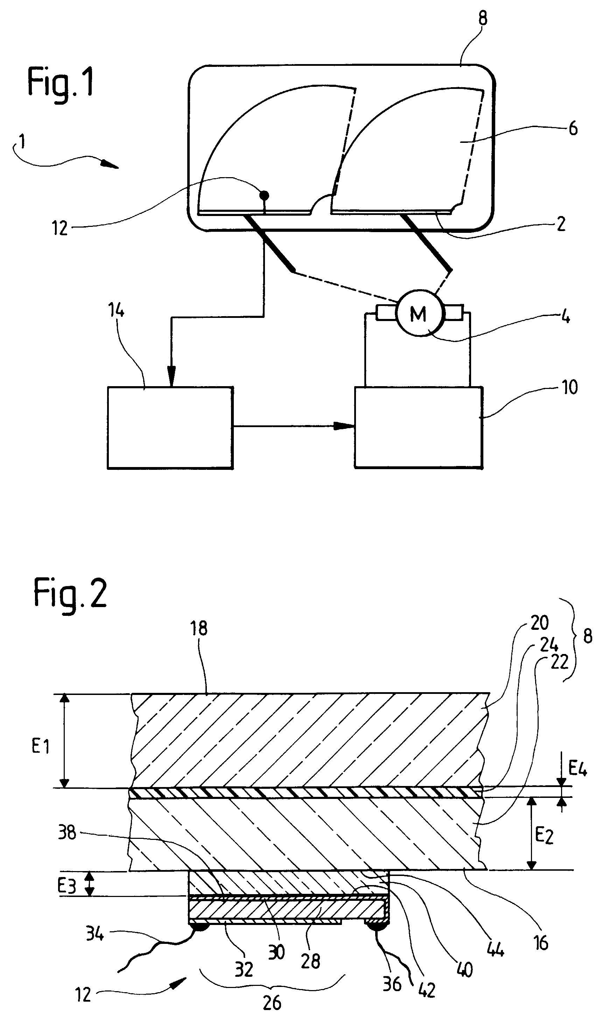

En se référant à la figure 1 on voit un système classique de nettoyage à commande automatique d'essuieglace désigné par la référence générale 1. Le système 1 comprend des essuie-glace 2 couplés mécaniquement à un moteur 4. Lorsque les essuie-glace sont actionnés, ils balaient respectivement des zones 6, en forme de secteur circulaire, d'un pare-brise 8. Des moyens d'actionnement 10, connectés au moteur 4, permettent d'enclencher et/ou de déclencher le moteur.

La commande automatique des essuie-glace est réalisée à l'aide du dispositif de détection selon l'invention 12, qui sera décrit plus en détail ci-après, placé contre le pare-brise 8 en regard d'une des zones 6, et d'un circuit de commande 14 susceptible de fournir un signal de commande approprié aux moyens d'actionnement 10 en réponse à un signal électrique de détection provenant du dispositif de détection 12.

En se référant maintenant à la figure 2, on voit en coupe le dispositif de détection 12 fixé sur la face intérieure 16 du pare-brise 8 et qui est destiné à fournir un signal de détection représentatif de la présence de corps étrangers à la surface extérieure du pare-brise 8.

Comme cela ressort de la figure 2, le pare-brise 8 est asymétrique, c'est-à-dire qu'il comprend une première plaque 20 ayant une première épaisseur E₁ et une deuxième plaque 22 ayant une deuxième épaisseur E₂. Les plaques 20 et 22, réalisées par exemple en verre transparent, sont assemblées au moyen d'une couche de liaison 24, également transparente, qui peut être par exemple une couche d'un polymère tel que le polyvinylbutadiène (PVB). Ces plaques 20 et 22 présentent donc des caractéristiques de transmission d'une onde ultrasonore équivalentes.

La première plaque 20, qui est destinée à venir en contact avec l'extérieur du véhicule présente typiquement une première épaisseur E₁ de l'ordre de 2,5 mm, tandis que la deuxième plaque 22, qui est destinée à venir en contact avec l'intérieur du véhicule, présente typiquement une deuxième épaisseur E₂ de l'ordre de 2,0 mm. La couche de liaison présente quant à elle une épaisseur E₃ typique de 0,75 mm.

Le dispositif de détection 12 comprend un transducteur 26 utilisé en émission et en réception. Le transducteur 26 comprend un élément piézoélectrique 28, par exemple en forme de pastille, et des électrodes d'excitation 30, 32 destinées à être respectivement reliées au circuit de commande 14 via des conducteurs 34, 36. L'électrode 30 s'étend sur la totalité de la face de l'élément piézoélectrique 28 qui se trouve en regard du pare-brise, qui est dite face émettrice/réceptrice 38, et sur une partie de la face opposée dudit élément 28 pour faciliter son raccordement. L'électrode 32, isolée de l'électrode 30, recouvre quant à elle la partie de ladite face opposée non recouverte par l'électrode 30.

Le dispositif de détection 12 comprend en outre, une lame 40 fixée d'une part, à la face émettrice/réceptrice 38 du transducteur 26 et, d'autre part, à la surface intérieure 16 du pare-brise 8.

La lame 40 présente une troisième épaisseur E₃ telle que la somme des deuxième E₂ et troisième E₃ épaisseurs est sensiblement égale à la première épaisseur E₁.

En généralisant le principe de l'invention, et conformément à ce qui a déjà été exposé dans la partie introductive de la présente description, après avoir choisi un transducteur qui émet un signal ultrasonore de longueur d'onde λ dans les plaques 20 et 22, l'épaisseur de la première plaque étant égale à k.λ/2, où k est un nombre entier, il est aisé de choisir une lame 40 de sorte que son épaisseur additionnée à celle de la deuxième plaque 22 soit égale à k'.λ/2, où k' est un nombre entier égal (cas particulier de la figure 2) ou différent de k.

Dans l'exemple représenté, le transducteur 26 est fixé au moyen d'un film de colle 42 sur une des faces de la lame 40 et la fixation de la lame 40 sur la face intérieure 16 est réalisée à l'aide d'une couche de pâte de verre ou glass fritt 44.

En outre, pour éviter les réflexions parasites et une trop grande absorption du signal ultrasonore émis par le transducteur 26 aux différentes interfaces, les couches 42 et 44 présentent une épaisseur très faible par rapport à la longueur d'onde λ de ce signal. Typiquement, la demanderesse a constaté que l'utilisation de couches ayant des épaisseurs respectives inférieures ou égales à λ/20 conduit à des résultats satisfaisants.

Pour fixer les idées, avec une fréquence du signal émis par le transducteur de l'ordre de 4MHz, un film de colle et une couche de pâte de verre ayant des épaisseurs respectives inférieures ou égales à 15x10⁻⁶ m et à 75x10⁻⁶ m donnent de bons résultats.

Afin de réaliser une transmission et une réception uniforme et efficace des signaux ultrasonores émis et reçus par le transducteur, on veillera à ce qu'aucune bulle d'air ne soit présente aux interfaces transmettant les signaux.

Dans l'exemple décrit, la lame 40 est réalisée en verre. Toutefois, selon une variante, cette lame pourrait être réalisée en tout autre matériau ayant une impédance acoustique sensiblement équivalente à celle avec laquelle elle sera associée.

Ainsi, après installation du dispositif de détection 12 de l'invention à la surface intérieure 16 du pare-brise asymétrique, l'ensemble formé par la lame 40 et la deuxième plaque 22 peut être assimilé à un milieu continu d'un même matériau et d'une épaisseur sensiblement égale à celle de la première plaque 20 si bien que les conditions de résonance dudit ensemble et de la première plaque sont sensiblement les mêmes et que les conditions de propagation des signaux ultrasonores peuvent être rendues optimales.

En pratique, l'invention peut donc être mise en oeuvre soit en rapportant l'ensemble formé par le transducteur 26 et la lame 40 sur la surface intérieure du pare-brise, soit en rapportant le transducteur 26 sur la lame 40 qui a été préalablement fixée sur la surface intérieure 16, par exemple au moment de la fabrication du pare-brise.

## Revendications

1. Dispositif de détection ultrasonore de corps étrangers présents à la surface extérieure d'une vitre, ledit dispositif étant destiné à être associé à une vitre comprenant au moins une première plaque ayant une première épaisseur, une deuxième plaque ayant une deuxième épaisseur inférieure à ladite première épaisseur, lesdites plaques étant assemblées par une couche de liaison, ledit dispositif comprenant un transducteur pouvant émettre, via une face émettrice/réceptrice, un signal ultrasonore incident ayant une longueur d'onde λ dans lesdites plaques, l'épaisseur de la première plaque étant égale à k.λ/2, où k est un nombre entier, ledit transducteur pouvant, en outre, recevoir, via ladite face émettrice/réceptrice un signal ultrasonore réfléchi représentatif de la présence ou de l'absence desdits corps étrangers pour élaborer un signal de détection, caractérisé en ce que ledit transducteur ultrasonore comporte une lame fixée sur ladite face émettrice/réceptrice, ladite lame étant destinée à être fixée sur ladite deuxième plaque, et en ce que ladite lame présente une troisième épaisseur telle que la somme des deuxième et troisième épaisseurs est sensiblement égale à k'.λ/2, où k' est un deuxième nombre entier.

2. Dispositif de détection ultrasonore selon la revendication 1, caractérisé en ce que la valeur de k est égale à celle de k'

3. Dispositif de détection ultrasonore selon la revendication 1 ou 2, caractérisé en ce que lesdites première et deuxième plaques ainsi que ladite lame sont réalisées en un matériau ayant des impédances acoustiques sensiblement équivalentes.

4. Dispositif de détection ultrasonore selon la revendication 2 ou 3, caractérisé en ce que lesdites première et deuxième plaques ainsi que ladite lame sont réalisées en verre.

5. Vitre comprenant au moins une première plaque ayant une première épaisseur, une deuxième plaque ayant une deuxième épaisseur inférieure à ladite première épaisseur, lesdites plaques étant assemblées par une couche de liaison, caractérisée en ce qu'elle comprend en outre un dispositif de détection ultrasonore de corps étrangers à la surface de ladite première plaque, ledit dispositif comprenant un transducteur pouvant émettre, via une face émettrice/réceptrice, un signal ultrasonore incident d'une longueur d'onde λ dans lesdites plaques, l'épaisseur de la première plaque étant égale à k.λ/2,où k est un nombre entier, ledit transducteur pouvant recevoir, via ladite face émettrice/réceptrice un signal ultrasonore réfléchi représentatif de la présence ou de l'absence desdits corps étrangers pour élaborer un signal de détection et ledit transducteur ultrasonore comportant une lame fixée entre ladite face émettrice/réceptrice et ladite deuxième plaque et présentant une troisième épaisseur telle que la somme des deuxième et troisième épaisseurs est sensiblement égale à k'.λ/2,où k' est un deuxième nombre entier.

6. Vitre selon la revendication 5, caractérisée en ce que la valeur de k est égale à celle de k'.

7. Vitre comprenant au moins une première plaque ayant une première épaisseur, une deuxième plaque ayant une deuxième épaisseur inférieure à ladite première épaisseur, lesdites plaques étant assemblées par une couche de liaison, ladite vitre étant destinée à être équipée un dispositif de détection ultrasonore de corps étrangers à la surface de ladite première plaque, ledit dispositif comprenant un transducteur pouvant émettre, via une face émettrice/réceptrice, un signal ultrasonore incident d'une longueur d'onde λ dans lesdites plaques telle que k.λ/2 est égal à l'épaisseur de ladite première plaque, où k est un nombre entier, ledit transducteur pouvant recevoir, via ladite face émettrice/réceptrice un signal ultrasonore réfléchi représentatif de la présence ou de l'absence desdits corps étrangers pour élaborer un signal de détection, caractérisée en ce qu'elle comprend en outre une lame fixée sur ladite deuxième plaque et présentant une troisième épaisseur telle que la somme des deuxième et troisième épaisseurs est sensiblement égale à k'.λ/2, où k' est un deuxième nombre entier.

## Patentansprüche

1. Vorrichtung zur Ultraschall-Erkennung von Fremdkörpern, die auf der Außenseite einer Glasscheibe präsent sind, welche Vorrichtung dazu bestimmt ist, einer Glasscheibe zugeordnet zu werden, die mindestens eine erste Scheibe mit einer ersten Dicke, eine zweite Scheibe mit einer zweiten Dicke kleiner als die erste Dicke umfaßt, welche Scheiben durch eine Verbindungsschicht gefügt sind, welche Vorrichtung einen Wandler umfaßt, der über eine Sende-/Empfangsseite ein in die Scheiben eindringendes Ultraschallsignal mit einer Wellenlänge λ aussenden kann, wobei die Dicke der ersten Scheibe gleich K^{·}λ/2 mit K als einer ganzen Zahl ist, welcher Wandler ferner über die Sende-/Empfangsseite ein reflektiertes Ultraschallsignal empfangen kann, das für Präsenz bzw. Absenz der Fremdkörper repräsentativ ist, um ein Erkennungssignal abzuleiten, dadurch gekennzeichnet, daß der Ultraschallwandler ein auf der Sende-/Empfangsseite befestigtes Plättchen umfaßt, das für die Befestigung an der zweiten Scheibe bestimmt ist, und daß das Plättchen eine dritte Dicke derart aufweist, daß die Summe der zweiten und dritten Dikke im wesentlichen gleich K'^{·} λ/2 mit K' als einer zweiten ganzen Zahl ist.

2. Vorrichtung zur Ultraschallerkennung nach Anspruch 1, dadurch gekennzeichnet, daß die Größe von K gleich der von K' ist.

3. Vorrichtung zur Ultraschallerkennung nach Anspruch 1 oder 2, dadurch gekennzeichnet, daß die ersten und zweiten Scheiben sowie das Plättchen aus einem Material mit im wesentlichen äquivalenten akustischen Impedanzen hergestellt sind.

4. Vorrichtung nach Anspruch 2 oder 3, dadurch gekennzeichnet, daß die ersten und zweiten Scheiben und das Plättchen aus Glas hergestellt sind.

5. Glasscheibe mit mindestens einer ersten, eine erste Dicke aufweisenden Scheibe, einer zweiten Scheibe mit einer zweiten Dicke, die kleiner als die erste Dicke ist, welche Scheiben durch eine Verbindungsschicht gefügt sind, dadurch gekennzeichnet, daß sie ferner eine Vorrichtung zur Ultraschallerkennung von Fremdkörpern auf der Oberfläche der ersten Scheibe umfaßt, welche Vorrichtung einen Wandler umfaßt, der über eine Sende-/Empfangsseite ein in die Scheiben eindringendes Ultraschallsignal mit einer Wellenlänge λ aussenden kann, wobei die Dicke der ersten Scheibe gleich K^{·}λ/2 mit K als einer ganzen Zahl ist, welcher Wandler ferner über die Sende-/Empfangsseite ein reflektiertes Ultraschallsignal empfangen kann, das für Präsenz bzw. Absenz der Fremdkörper repräsentativ ist, um ein Erkennungssignal abzuleiten, und daß der Ultraschallwandler ein zwischen der Sende-/Empfangsseite und der zweiten Scheibe befestigtes Plättchen umfaßt, das eine dritte Dicke derart aufweist, daß die Summe der zweiten und dritten Dicke im wesentlichen gleich K'^{·} λ/2 mit K' als einer zweiten ganzen Zahl ist.

6. Glasscheibe nach Anspruch 5, dadurch gekennzeichnet, daß die Größe von K gleich der von K' ist.

7. Glasscheibe mit mindestens einer ersten, eine erste Dicke aufweisenden Scheibe, einer zweiten Scheibe mit einer zweiten Dicke, die kleiner als die erste Dicke ist, welche Scheiben durch eine Verbindungsschicht gefügt sind, welche Glasscheibe dazu bestimmt ist, mit einer Vorrichtung zur Ultraschallerkennung von Fremdkörpern auf der ersten Scheibe bestückt zu werden, welche Vorrichtung einen Wandler umfaßt, der über eine Sende-/Empfangsseite ein in die Scheiben eindringendes Ultraschallsignal mit einer Wellenlänge λ aussenden kann, wobei die Dicke der ersten Scheibe gleich K^{·}λ/2 mit K als einer ganzen Zahl ist, welcher Wandler ferner über die Sende-/Empfangsseite ein reflektiertes Ultraschallsignal empfangen kann, das für Präsenz bzw. Absenz der Fremdkörper repräsentativ ist, um ein Erkennungssignal abzuleiten, dadurch gekennzeichnet, daß sie ferner ein an der zweiten Scheibe befestigtes Plättchen mit einer dritten Dicke umfaßt, derart, daß die Summe der zweiten und dritten Dicke im wesentlichen gleich K'^{·} λ/2 mit K' als einer zweiten ganzen Zahl ist.

## Claims

1. Device for ultrasonically detecting the presence of foreign bodies on the exterior surface of a window, said device intended to be used with a window comprising at least a first sheet of a first thickness, a second sheet of a second thickness inferior to said first thickness, said sheets being joined together by a connecting layer, said device comprising a transducer able to emit, via a transmitting/receiving face, an incidental ultrasonic signal of wavelength λ in said sheets, the thickness of the first sheet being equal to k.λ/2, where k is an integral number, said transducer being able also to receive, via said transmitting/receiving face a reflected ultrasonic signal representative of the presence or absence of said foreign bodies to generate a detection signal, characterized in that said ultrasonic transducer comprises a plate fixed onto said transmitting/receiving face, said plate being intended to be fixed onto said second sheet, and in that said sheet has a third thickness such that the sum of the second and third thicknesses is approximately equal to k'.λ/2, where k' is a second integral number.

2. Ultrasonic detection device according to claim 1, characterized in that the value of k is equal to that of k'.

3. Ultrasonic detection device according to claim 1 or 2, characterized in that said first and second sheets and said plate are formed of a material with approximately equal acoustic impedances.

4. Ultrasonic detection device according to claim 2 or 3, characterized in that said first and second sheets and said plate are formed of glass.

5. Window comprising at least a first sheet of a first thickness, a second sheet of a second thickness inferior to said first thickness, said sheets being joined together by a connecting layer, characterized in that it also comprises a device for ultrasonically detecting the presence of foreign bodies on the surface of said first sheet, said device comprising a transducer capable of emitting, via a transmitting/receiving face, an incidental reflected ultrasonic signal of wavelength λ in said sheets, the thickness of said first sheet being equal to k.λ/2, where k is an integral number, said transducer being capable of receiving, via said transmitting/ receiving face a reflected ultrasonic signal representative of the presence or absence of said foreign bodies to generate a detection signal and said ultrasonic transducer comprising a plate fixed between said transmitting/ receiving face and said second sheet and providing a third thickness such that the sum of the second and third thicknesses are approximately equal to k'.λ/2, where k' is a second integral number.

6. Window according to claim 5, characterized in that the value of k is equal to that of k'.

7. Window comprising at least a first sheet of a first thickness, a second sheet of a second thickness inferior to that of said first thickness, said sheets being joined together by a connecting layer, said window intended to be equipped with a device for ultrasonically detecting the presence of foreign bodies on the surface of said first sheet, said device comprising a transducer able to emit, via a transmitting/receiving face, an incidental ultrasonic signal of wavelength λ in said sheets so that k.λ/2 is equal to the thickness of said first sheet, where k is an integral number, said transducer being capable of receiving, via said transmitting/receiving face a reflected ultrasonic signal representative of the presence or absence of said foreign bodies to generate a detection signal, characterized in that it also comprises a plate fixed onto said first sheet and providing a third thickness such that the sum of the second and third thicknesses is approximately equal to k'.λ/2, where k' is a second integral number.
